# DEMANDE DE BREVET EUROPEEN

(11) **EP 1 462 774 A1**
(43) Date de publication de la demande: **29.09.2004**
(21) Numéro de dépôt: 03291495.4
(22) Date de dépôt: 19.06.2003
(51) Int. Cl.: G01F 1/22

(54) **Débitmétre à flotteur à débit variable**

(30) Priorité: 18.03.2003 FR 0303577
(71) Demandeur: GCE SAS, 58400 La Charité sur Loire (FR)
(72) Inventeur: Rousselin, Guy, 18140 Herry (FR)
(74) Mandataire: Debay, Yves

(57) **Abrégé**

La présente invention concerne un débitmètre comportant un corps d'entrée (2) composé d'un moyen de mesure de débit (21, 22) et un corps de sortie (3) composé d'un moyen de réglage du débit , caractérisé d'une part en ce que le corps d'entrée (2), fixé au corps de sortie (3), forme un ensemble monobloc, dans lequel sont le tube d'entrée (20) et le tube de mesure (21) et caractérisé d'autre part en ce que le moyen de réglage du débit est constitué d'un disque (30) entraîné par un bouton (32) et percé de trous (70_{0,....,} 70ₙ et 71_{0,....,} 71ₙ) dont toujours au moins un est en vis-à-vis du tube de sortie, quelque soit la position du disque, pour permettre une distribution de fluide sans risque d'interruption même pendant le réglage du débit et un réglage progressif du débit.

## Description

La présente invention concerne un dispositif de débitmètre à flotteur à débit variable pourvu d'un dispositif de régulation de débit de fluides en sortie du débitmètre.

Les débitmètres, et plus particulièrement les rotamètres, permettent de mesurer le volume de fluides en écoulement. Ces débitmètres sont généralement utilisés dans le domaine médical lorsqu'il s'avère important de pouvoir mesurer ou contrôler qu'un certain volume de fluide s'écoule de manière régulière et déterminée. Bien entendu de tels appareils peuvent également être utilisés dans d'autres domaines tels que les laboratoires d'analyse, de recherche, etc.

Ce type de dispositif comporte généralement un corps, un moyen de mesure du débit et un moyen de réglage du débit. Le corps comporte, suivant le sens de circulation du fluide, des circuits fluidiques entre une entrée de corps, le moyen de mesure, le moyen de réglage et une sortie de corps. Le moyen de mesure est généralement constitué d'un tube gradué à l'intérieur duquel est placée une bille de taille et de poids appropriés. L'arrivée du fluide s'effectue par le bas du tube et sa sortie par le haut. Le fluide qui est envoyé dans ce type de dispositif est sous une faible pression comprise approximativement entre 0 et 10 bars.

Les débitmètres sont généralement pourvus de dispositifs de réglage de débit de fluides permettant si possible de procéder à des réglages très fins de débits même très faibles. Ces dispositifs associés aux débitmètres sont généralement constitués d'un dispositif à robinet avec pointeau, à aiguille métal sur métal ou à aiguille d'obturation conique d'un orifice de passage du fluide. Ainsi, le passage du fluide est obstrué en partie par le robinet ou l'aiguille dont la profondeur de l'engagement dans l'orifice de passage définit la section de passage des fluides.

Cependant, un tel dispositif à aiguille d'obturation conique étant très fin, il se révèle fragile et sa production en série s'avère difficile. De plus, ces dispositifs à robinet ou aiguille ont tendance à prendre du jeu au cours du temps et à dégrader la précision du réglage ainsi que sa stabilité dans le temps.

Un autre inconvénient de ces dispositifs est la présence d'une cloche d'étanchéité sur le tube de mesure. Cette cloche étant un élément séparé du reste du dispositif et nécessitant des joints, il peut en résulter des problèmes d'étanchéité.

Il est également connu des installations de réglage du débit de distribution de fluides dans lesquelles le conduit d'arrivée du fluide débouche sur un disque percé d'une rangée de trous de diamètres croissants pouvant être placés successivement face au conduit d'arrivée du fluide grâce à un bouton moleté permettant une augmentation discrète et discontinue du débit du fluide. Ce mode de réalisation ne permet pas une augmentation continue et progressive car présente un risque d'interruption du débit lorsque aucun des trous du disque ne fait face au conduit d'arrivée du fluide. Ceci est un inconvénient majeur lorsque le fluide dont le débit doit être distribué est un fluide vital pour un être vivant.

La présente invention a donc pour objet de pallier les inconvénients de l'art antérieur en proposant un dispositif totalement étanche, ne comportant pas de risques de dégradation du réglage et de la mesure du débit et permettant un réglage du débit progressif, sans risque d'interruption du débit.

Le but de l'invention est atteint par un débitmètre comportant un moyen d'arrivée du fluide composé d'un adaptateur, un corps supérieur d'entrée du fluide composé d'un tube d'entrée du fluide, d'un moyen de mesure de débit constitué d'un tube contenant une bille et d'un tube de circulation du fluide, un moyen de réglage du débit du fluide et un corps inférieur de sortie du fluide contenant un tube de sortie du fluide, caractérisé en ce que le corps supérieur d'entrée du fluide est rendu solidaire du corps inférieur de sortie du fluide et ce corps supérieur est constitué d'un ensemble monobloc moulé, dans lequel sont formés un tube d'entrée, un tube de mesure du débit communiquant avec le tube d'entrée et un tube de circulation du fluide communiquant par une extrémité avec le tube de mesure et par l'autre extrémité avec un moyen de réglage du débit vers le tube de sortie.

Selon une autre particularité, le moyen de réglage du débit est constitué d'un disque métallique entraîné en rotation par des moyens et percé de trous dont toujours au moins un est en vis-à-vis du tube de sortie, quelle que soit la position du disque, pour permettre une distribution de fluide sans risque d'interruption même pendant le réglage du débit et un réglage progressif du débit en fonction du diamètre du ou des trous et ou de la densité des trous en vis-à-vis du tube de sortie.

Selon une autre particularité, le corps supérieur d'entrée du fluide, dont la base a les mêmes dimensions que celles du corps inférieur de sortie du fluide, est fixé au corps inférieur par des vis en ses quatre coins, par collage, par soudage ou par clipsage.

Selon une autre particularité, le tube d'entrée du fluide est perpendiculaire au tube de mesure du débit contenant la bille.

Selon une autre particularité, le tube de mesure du débit contenant la bille est légèrement conique.

Selon une autre particularité, le tube de mesure du débit contenant la bille possède, sur une au moins une portion, une paroi transparente et graduée permettant la visualisation de la bille par l'utilisateur et la lecture du débit obtenu.

Selon une autre particularité, le tube de mesure du débit contenant la bille est parallèle au tube de circulation du fluide.

Selon une autre particularité, le tube de circulation du fluide est légèrement conique.

Selon une autre particularité, le moyen de réglage du débit du fluide est constitué d'un disque métallique entraîné en rotation par des moyens et percé de trous dont toujours au moins un est en vis-à-vis d'un conduit de sortie, quelle que soit la position du disque, le corps comportant le conduit de sortie du fluide, pour permettre une distribution de fluide sans risque d'interruption même pendant le réglage du débit et un réglage progressif du débit en fonction du diamètre du ou des trous et ou de la densité des trous en vis-à-vis du conduit de sortie.

Selon une autre particularité le disque est percé d'au moins deux rangées concentriques de trous de dimensions précises et dont les trous de chaque rangée sont disposés selon un pas angulaire régulier et décalés angulairement par rapport aux trous de l'autre rangée, le diamètre des trous rencontrés successivement dans un sens de rotation donné variant progressivement pour chaque trou successif appartenant à deux rangées différentes et adjacent angulairement, l'espacement des trous successifs de deux rangées étant inférieur aux diamètres des conduits d'arrivée et de sortie du fluide dans le corps, le conduit de sortie ou d'arrivée du fluide faisant face à plusieurs trous du disque associé à des moyens d'entraînement pour permettre un réglage progressif du débit sans risque d'interruption du débit du fluide.

Selon une autre particularité, le disque comporte une seule découpe continue sur un secteur angulaire et à axe de symétrie circulaire dont la largeur varie progressivement avec l'angle du rayon d'intersection de la découpe.

Selon une autre particularité, le moyen d'entraînement est un bouton tournant dans le corps et solidaire en rotation du disque métallique afin de permettre sa rotation pour régler le débit, un perçage dans le bouton permettant la circulation du fluide jusqu'aux trous de précision du disque métallique de réglage du débit du fluide.

Selon une autre particularité, un perçage dans une partie inférieure du corps constitue le tube de sortie du fluide dont le diamètre est supérieur à l'espacement entre au moins deux trous de précision d'une même rangée du disque afin d'assurer que le tube de sortie soit toujours en face de trois trous de précision du disque métallique de réglage du débit.

Selon une autre particularité, l'étanchéité de l'installation est assurée par des joints toriques disposés dans des gorges formées d'une part sur la périphérie de la surface cylindrique du bouton, d'autre part sur la surface périphérique interne d'une jupe du bouton et respectivement les parties inférieure et supérieure du corps contenant le conduit d'arrivée et respectivement le conduit de sortie et enfin par un joint disposé entre le disque et le conduit de sortie dans un perçage de plus grand diamètre que le conduit de sortie du fluide.

Selon une autre particularité, le bouton tournant est moleté sur sa périphérie extérieure et saillant sur au moins une face du corps pour permettre son entraînement manuel.

Selon une autre particularité, le corps est réalisé en deux pièces en matière plastique moulées, enserrant au moins partiellement le bouton et le disque.

Selon une autre particularité, le disque est de diamètre inférieur au bouton.

Selon une autre particularité, les orifices en vis-à-vis du disque sont en vis-à-vis d'au moins trois trous.

L'invention, avec ses caractéristiques et avantages, ressortira plus clairement à la lecture de la description faite en référence aux dessins annexés dans lesquels :
- la figure 1 représente la vue de dessus du débitmètre ;
- la figure 2a représente la section transversale du débitmètre selon l'axe A-A ;
- la figure 2b représente la section transversale du débitmètre selon l'axe B-B ;
- la figure 3 représente une vue de profil du débitmètre ;
- la figure 4 représente une vue de dessous du corps supérieur ;
- la figure 5a représente la section transversale du corps supérieur du débitmètre selon l'axe A-A ;
- les figures 5b et 5c représentent respectivement la section transversale du corps supérieur du débitmètre selon l'axe B-B et l'agrandissement de la section de communication des tubes d'entrée et de circulation;
- la figure 6 représente une section transversale du bouton moleté;
- la figure 7 représente une vue de dessus du disque métallique de réglage du débit.
- la figure 8 représente en vue de dessus le disque métallique de réglage de débit de distribution de fluides selon une variante de l'invention avec une seule découpe continue sur un secteur angulaire et à axe de symétrie circulaire dont la largeur varie progressivement avec l'angle du rayon d'intersection de la découpe.

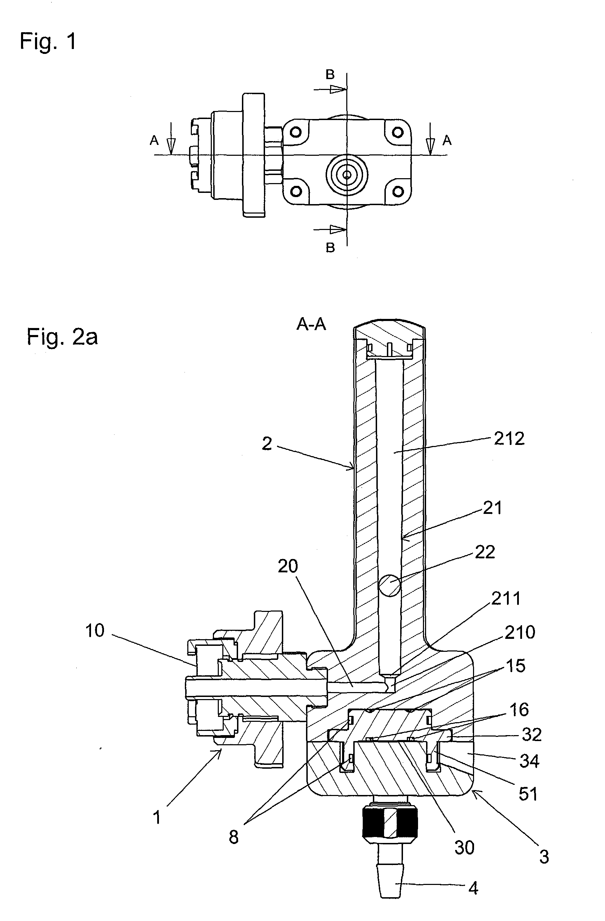

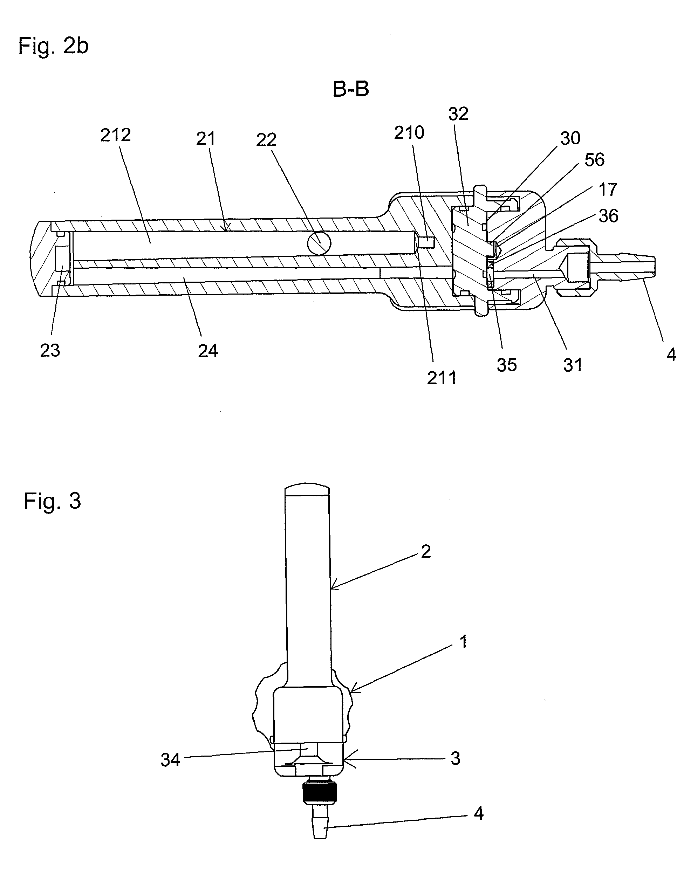

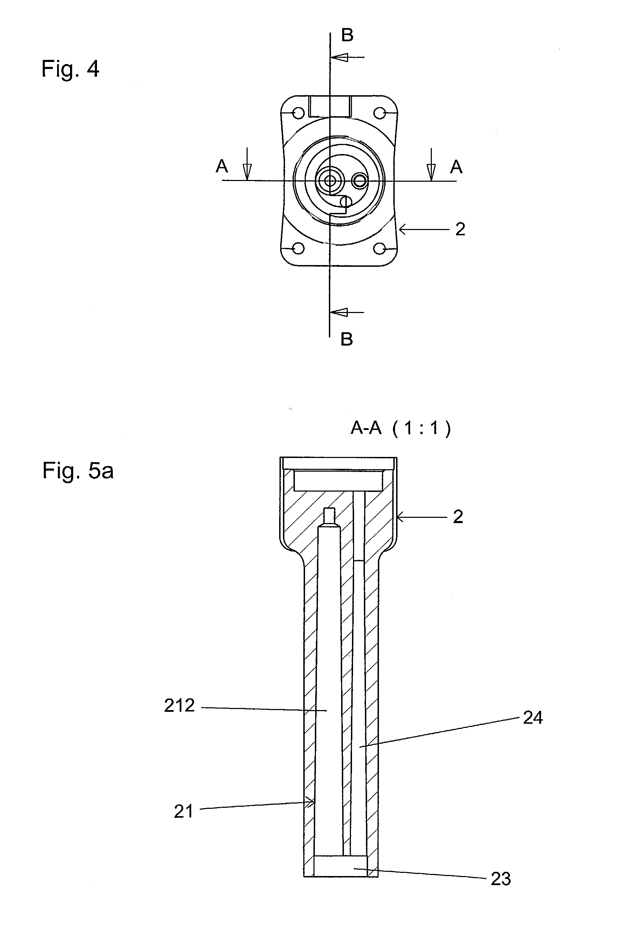

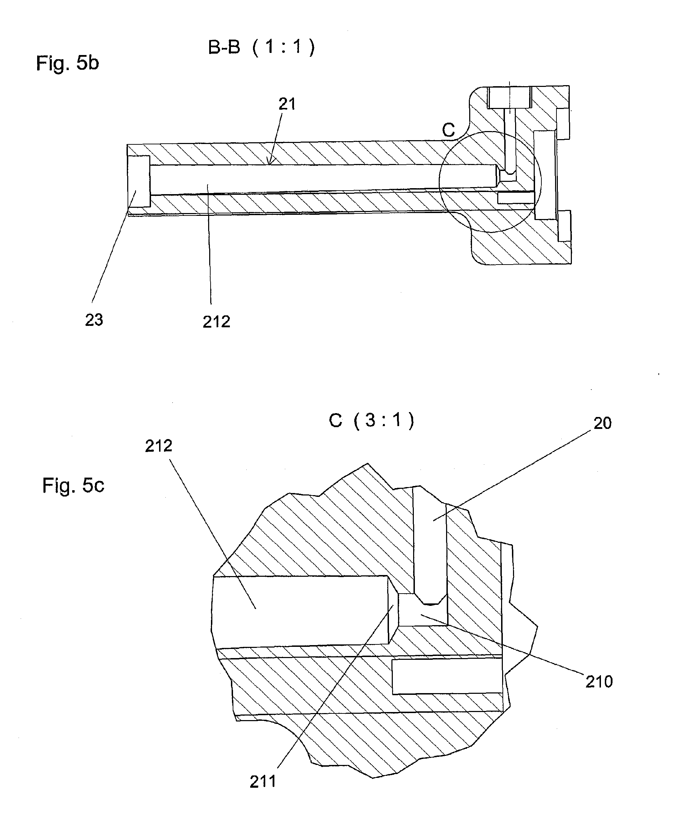

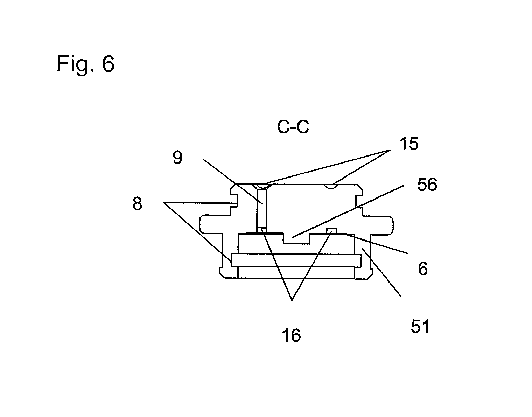

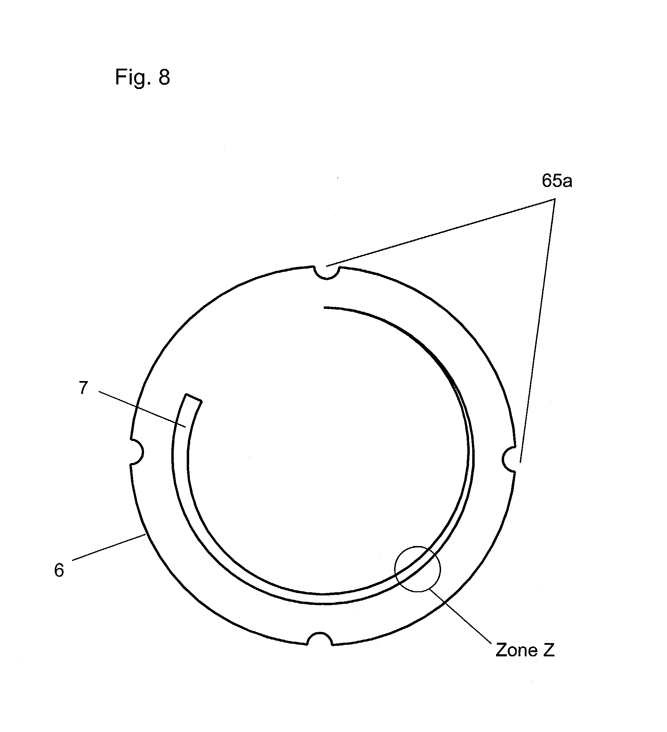

L'invention va à présent être décrite en liaison avec les figures 1 à 8.

Le débitmètre comporte quatre parties principales :
- un moyen d'arrivée (1 ) du fluide comportant un adaptateur (10) ;
- le corps supérieur d'entrée (2) du fluide composé d'un tube (20) d'entrée du fluide, d'un moyen de mesure de débit constitué d'un tube de mesure conique (21) contenant une bille (22) et un tube de circulation (24) du fluide, conique également ;
- un moyen de réglage du débit constitué d'un bouton cylindrique (32), moleté sur sa périphérie, saillant sur au moins une des faces du débitmètre pour permettre son entraînement manuel et solidaire en rotation d'un disque métallique (30) percé d'au moins deux rangées de trous de dimensions précises;
- le corps inférieur de sortie (3) du fluide contenant un tube de sortie du fluide (31).

L'adaptateur (10) permet le montage sur la source de fluides et débouche sur le corps supérieur d'entrée (2) des fluides.

Le corps supérieur d'entrée (2) du fluide forme un ensemble monobloc rectangulaire par exemple fixé au corps inférieur de sortie (3) du fluide. Des cavités, telles que les tubes d'entrée (20), de mesure (21) et de circulation (22), permettant le passage du fluide, sont creusées ou moulées dans ce corps supérieur (2), permettant ainsi d'obtenir un ensemble monobloc étanche. Le corps supérieur d'entrée (2) du fluide, dont la base a les mêmes dimensions que celles du corps inférieur de sortie (3) du fluide, est fixé au corps inférieur (3) par des vis en ses quatre coins, par collage, par soudage, ou par clipsage.

Le fluide entre donc par le biais de l'adaptateur (10) dans le débitmètre. Il passe dans le tube d'entrée (20) qui peut se rétrécir avant la coudée qu'il forme avec le tube de mesure (21). L'extrémité du tube d'entrée forme un cône de manière à s'emboîter perpendiculairement à l'extrémité cylindrique (210) du tube de mesure (21). Ce tube de mesure (21) peut être composé de trois parties : un tube cylindrique (210) court formant l'extrémité d'emboîtement, un cône d'élargissement (211) de 120° et un conduit légèrement conique (212) à l'intérieur duquel une bille (22) est placée. L'arrivée du fluide s'effectue par le bas du tube (21) et sa sortie par le haut.

Le fluide passe ensuite dans une cavité (23) située dans la partie supérieure du corps supérieur (2). Cette cavité permet le raccord entre la partie conique supérieure (212) du tube de mesure (21) et le tube de circulation (24) du fluide. Ces deux tubes sont parallèles et se situent dans le même plan de la coupe transversale du débitmètre selon l'axe B-B. Après passage dans la cavité (23), le fluide emprunte le tube de circulation (24). Le sens du fluide dans le tube de circulation (24) est donc opposé au sens du fluide dans le tube de mesure (21). Le débit de gaz délivré est lu sur l'échelle imprimée sur le tube au niveau de la bille. La hauteur de la bille dans la colonne résulte de l'équilibre entre 2 forces agissant sur la bille : le poids de la bille d'une part et les forces de frottement du gaz qui s'écoulent entre le petit espace restant entre la paroi du tube et la bille. De cette manière plus le débit de gaz est important et plus la bille est élevée dans la colonne, car la colonne est légèrement conique, la colonne étant maintenue verticale, avec sa plus grande section en haut. Une paroi transparente et graduée, sur au moins une portion du tube de mesure (21), permet la visualisation de la bille par l'utilisateur et la lecture du débit obtenu.

Le fluide passe ensuite par le moyen de réglage du débit du fluide. Celui-ci se situe entre le corps supérieur (2) et le corps inférieur (3) et il est composé d'un bouton (32) cylindrique, moleté sur la périphérie du cylindre, saillant sur au moins une des faces du débitmètre et monté solidaire en rotation d'un disque métallique (30) de réglage du débit percé de, par exemple, deux rangées (70, 71) de trous (70₀,...., 70ₙ et 71_{0,....,} 71 ₙ) de précision de diamètres croissants. Dans l'exemple de réalisation la croissance du diamètre des trous d'une rangée (70) est obtenue avec un incrément qui permet d'intercaler les diamètres des trous de l'autre rangée (71). La solidarisation du bouton (32) avec le disque est réalisée par une forme (56) complémentaire à une découpe (65) réalisée sur le disque (30), ou vice versa. Le montage en rotation du bouton (32) moleté par rapport au corps est obtenu par un perçage (17) dans le corps, dans lequel s'insère la forme (56) du bouton moleté, ou vice versa et par un prolongement en jupe (51) de la face, par exemple inférieure du bouton coopérant avec une gorge de forme complémentaire (33) réalisée dans la partie du corps en vis-à-vis de la face du bouton sur laquelle la jupe est formée. Sur une des faces du corps en vis-à-vis de la face du bouton sur laquelle la jupe est formée, une encoche (34) permet par exemple la visibilité de la jupe (51) du bouton (32) moleté et la lecture du débit souhaité. Le bouton moleté est monté de façon étanche entre les corps d'arrivée (2) et de sortie (3) du fluide grâce à des joints toriques disposés dans chaque gorge ménagée dans le bouton moleté (8) de part et d'autre des gorges de circulation (15, 16) formées sur chaque face supérieure et inférieure du bouton moleté. Le bouton (32) moleté est percé d'un conduit (9) débouchant sur les deux gorges de circulation (15 et 16) permettant la circulation du fluide entre le tube de circulation (24) et les trous (70, 71) de précision du disque métallique de réglage du débit faisant face au tube (31) de sortie du fluide. Le tube de sortie du fluide (31) consiste en un perçage dans une partie inférieure du corps de sortie du fluide (3) et débouche sur le disque (30) de réglage du débit par un perçage de plus grand diamètre (35) dans lequel est disposé un joint (36) assurant l'étanchéité entre le disque (30) et le tube de sortie (31), tout en ménageant un passage de diamètre suffisant pour mettre en correspondance une zone Z du disque (30) avec le tube de sortie (31).

Dans une première variante de réalisation de l'invention la taille des trous (70_{0,...,} 70ₙ et 71_{0,....,} 71ₙ) en vis-à-vis de la zone Z de passage vers le conduit de sortie augmente progressivement.

Dans une seconde variante de réalisation les trous conservent un diamètre constant mais leur densité en vis-à-vis de la zone Z varie progressivement.

Dans une quatrième variante, le disque (6) comporte une seule découpe (7) continue sur un secteur angulaire et à axe de symétrie circulaire dont la largeur varie progressivement avec l'angle du rayon d'intersection de la découpe, de sorte que la surface en vis à vis avec la zone Z varie progressivement.

Enfin dans une dernière variante de réalisation le diamètre et la densité des trous varient.

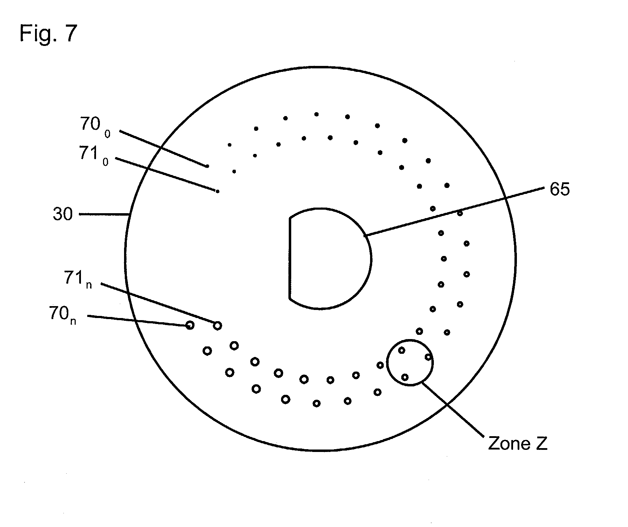

La zone Z est détaillée sur la figure 7 et fait apparaître que plusieurs trous (70_{0,....,} 70ₙ et 71_{0,....,} 71 ₙ) d'une même rangée et/ou de rangées différentes sont toujours en vis-à-vis de la zone. La zone a donc une dimension minimale correspondant à l'intervalle maximum qui sépare deux trous quelle que soit la direction dans laquelle ils sont situés.

En fonctionnement, le fluide est acheminé par le tube de circulation (24) débouchant sur une gorge (15) ménagée dans le bouton moleté permettant la circulation du fluide jusqu'au conduit dans le bouton moleté (9) débouchant sur une gorge (16) de l'autre côté du bouton moleté, faisant face aux deux rangées (70, 71) de trous de précision du disque métallique de réglage du débit (30) sur lequel débouche le tube de sortie du fluide (31). L'étanchéité entre le bouton moleté (32) et les corps d'arrivée (2) et de sortie (3) du fluide est assurée de part et d'autre (8) du conduit dans le bouton moleté (9) de façon à ce que le fluide ne circule qu'à travers celui-ci. Le diamètre du bouton moleté (32) est supérieur à la largeur des corps d'arrivée (2) et de sortie (3) de façon à permettre à l'utilisateur la rotation du bouton moleté (32), solidaire du disque de réglage (30), afin de régler le débit du fluide en plaçant plusieurs trous (70_{0,....,} 70ₙ et 71₀,...., 71ₙ) de précision de différents diamètres (70, 71) en face du tube de sortie du fluide (31), dont le diamètre est supérieur à l'espacement entre deux trous de précision du disque (30). Le tube de sortie du fluide (31) débouche sur une prise pour tuyau de distribution de fluides (4).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Débitmètre comportant un moyen d'arrivée du fluide composé d'un adaptateur (1), un corps supérieur d'entrée (2) de fluide composé d'un tube d'entrée (20) du fluide, d'un moyen de mesure de débit constitué d'un tube conique vertical (21) contenant une bille (22) et d'un tube de circulation du fluide (24), et un corps inférieur de sortie (3) du fluide composé d'un moyen de réglage du débit du fluide et d'un tube de sortie (31) du fluide, **caractérisé en ce que** le corps supérieur (2) d'entrée du fluide est rendu solidaire du corps inférieur (3) de sortie du fluide et ce corps supérieur (2) est constitué d'un ensemble monobloc moulé, dans lequel sont formés un tube d'entrée (20) , un tube de mesure (21) du débit communiquant avec le tube d'entrée (20) et un tube de circulation (24) du fluide communiquant par une extrémité avec le tube de mesure (21) et par l'autre extrémité avec un moyen de réglage du débit vers le tube de sortie (31).

2. Installation de réglage du débit de distribution de fluides selon la revendication 1, **caractérisée en ce que** le disque (6) comporte une seule découpe (7) continue sur un secteur angulaire et à axe de symétrie circulaire dont la largeur varie progressivement avec l'angle du rayon d'intersection de la découpe.

3. Débitmètre selon la revendication 1, **caractérisé en ce que** le moyen de réglage du débit est constitué d'un disque (30) métallique entraîné en rotation par des moyens et percé de trous dont toujours au moins un est en vis-à-vis du tube de sortie (31), quelle que soit la position du disque (30), pour permettre une distribution de fluide sans risque d'interruption même pendant le réglage du débit et un réglage progressif du débit en fonction du diamètre du ou des trous (70_{0,....,} 70ₙ et 71₀,...., 71ₙ) et ou de la densité des trous en vis-à-vis du tube de sortie (31).

4. Débitmètre selon une des revendications 1 à 3, **caractérisé en ce que** le corps supérieur d'entrée (2) du fluide, dont la base a les mêmes dimensions que celles du corps inférieur de sortie (3) du fluide, est fixé au corps inférieur (3) par des vis en ses quatre coins, ou par collage, ou par soudage, ou par clipsage.

5. Débitmètre selon une des revendications 1 à 4, **caractérisé en ce que** le tube d'entrée (20) du fluide est perpendiculaire au tube de mesure du débit (21) contenant la bille (22).

6. Débitmètre selon une des revendications 1 à 5, **caractérisé en ce que** le tube de mesure (21) du débit contenant la bille (22) est légèrement conique.

7. Débitmètre selon une des revendications 1 à 6, **caractérisé en ce que** le tube de mesure (21) du débit contenant la bille (22) possède, sur une au moins une portion, une paroi transparente et graduée permettant la visualisation de la bille (22) par l'utilisateur et la lecture du débit obtenu.

8. Débitmètre selon une des revendications 1 à 7, **caractérisé en ce que** le tube de mesure (21) du débit est parallèle au tube de circulation (24) du fluide.

9. Débitmètre selon une des revendications 1 à 8, **caractérisé en ce que** le tube de circulation (24) du fluide est légèrement conique.

10. Débitmètre selon une des revendications 1 et 3, **caractérisé en ce que** le moyen de réglage du débit du fluide est constitué d'un disque métallique (30) entraîné en rotation par des moyens et percé de trous (70₀,...., 70ₙ et 710_{0,.... ,} 71ₙ) dont toujours au moins un est en vis-à-vis d'un conduit de sortie (31), quelle que soit la position du disque, le corps (3) comportant le conduit de sortie (31) du fluide, pour permettre une distribution de fluide sans risque d'interruption même pendant le réglage du débit et un réglage progressif du débit en fonction du diamètre du ou des trous e(70_{0,...,} 70ₙ et 71_{0,....,} 71 ₙ) t ou de la densité des trous en vis-à-vis du conduit de sortie (31 ).

11. Débitmètre selon la revendication 10, **caractérisé en ce que** le disque (30) est percé d'au moins deux rangées (70, 71) concentriques de trous de dimensions précises et dont les trous (70_{0,....,} 70ₙ et 71_{0,....,} 71ₙ) de chaque rangée sont disposés selon un pas angulaire régulier et décalés angulairement par rapport aux trous de l'autre rangée, le diamètre des trous rencontrés successivement dans un sens de rotation donné variant progressivement pour chaque trou successif appartenant à deux rangées différentes et adjacent angulairement l'espacement des trous successifs de deux rangées étant inférieur aux diamètres des conduits d'arrivée (24) et de sortie (31) du fluide dans le corps, le conduit de sortie ou d'arrivée du fluide faisant face à plusieurs trous du disque associé à des moyens d'entraînement pour permettre un réglage progressif du débit sans risque d'interruption du débit du fluide.

12. Débitmètre selon une des revendications 10 et 11, **caractérisé en ce que** le moyen d'entraînement est un bouton (32) tournant dans le corps et solidaire en rotation du disque (30) métallique afin de permettre sa rotation pour régler le débit, un perçage dans le bouton permettant la circulation du fluide jusqu'aux trous de précision du disque métallique de réglage du débit du fluide.

13. Débitmètre selon une des revendications 1 et 3 à 12, **caractérisé en ce qu'**un perçage dans une partie inférieure du corps constitue le tube de sortie du fluide dont le diamètre est supérieur à l'espacement entre au moins deux trous (70_{0, ....,} 70ₙ et 71_{0,....,} 71ₙ) de précision d'une même rangée du disque (30) afin d'assurer que le conduit de sortie (31) soit toujours en face de trois trous de précision du disque métallique de réglage du débit.

14. Débitmètre selon une des revendications 1 à 13, **caractérisé en ce que** l'étanchéité de l'installation est assurée par des joints toriques disposés dans des gorges (15, 16) formées d'une part sur la périphérie de la surface cylindrique du bouton (32), d'autre part sur la surface périphérique interne d'une jupe (51) du bouton (32) et respectivement les parties inférieure et supérieure du corps contenant le conduit d'arrivée (24) et respectivement le conduit de sortie (31) et enfin par un joint (36) disposé entre le disque (30) et le tube de sortie (31) dans un perçage de plus grand diamètre que le conduit de sortie (31) du fluide.

15. Débitmètre selon la revendication 8, **caractérisé en ce que** le bouton (32) tournant est moleté sur sa périphérie extérieure et saillant sur au moins une face du corps pour permettre son entraînement manuel.

16. Débitmètre selon une des revendications 1 à 15, **caractérisé en ce que** le corps est réalisé en deux pièces en matière plastique moulées, enserrant au moins partiellement le bouton (32) et le disque (30).

17. Débitmètre selon la revendication 8, **caractérisé en ce que** le disque (30) est de diamètre inférieur au bouton (32).

18. Débitmètre selon une des revendications 1 et 3 à 17, **caractérisé en ce que** les orifices en vis-à-vis du disque (30) sont en vis-à-vis d'au moins trois trous (70_{0,.....,} 70ₙ et 71_{0,....,} 71 ₙ).
